# EUROPEAN PATENT SPECIFICATION

(11) **EP 3 086 625 B1**
(45) Date of publication and mention of the grant of the patent: **05.09.2018**
(21) Application number: 16166324.0
(22) Date of filing: 21.04.2016
(51) Int. Cl.: H05B 33/08, H05B 41/282, H05B 41/392, H02M 3/335, H02M 7/48, H02M 1/00

(54) **A SWITCHING CONVERTER FOR DRIVING VARIABLE LOAD VOLTAGES**
SCHALTWANDLER ZUR ANSTEUERUNG VARIABLER LASTSPANNUNGEN
CONVERTISSEUR DE COMMUTATION POUR L'ENTRAÎNEMENT DE TENSIONS DE CHARGE VARIABLE

(30) Priority: 22.04.2015 GB 201507162
(43) Date of publication of application: 26.10.2016
(73) Proprietor: Tridonic GmbH & Co KG, 6851 Dornbirn (AT)
(72) Inventor: Kelly, Jamie, Tyne & Wear, NE29 8AH (GB)
(74) Representative: Rupp, Christian

(56) References cited:
- US-A1- 2013 163 290

## Description

### FIELD OF THE INVENTION

The invention relates to a switching converter, preferably a resonant converter of a ballast for driving a lighting means. The invention further refers to a ballast for a lighting means comprising the switching converter.

### BACKGROUND OF THE INVENTION

Driver circuits for operating lighting means are well known in the prior art. For instance a switching converter is used as a driver circuit.

A switching converter regulates the output voltage or the output current through a load by switching an inductance element by means of a switching element.

Switching converters for lighting means, such as a light emitting diode, short: LED, or a discharge lamp, are used to provide a DC supply voltage or a DC supply current in order to operate the lighting means.

A switching converter that uses a resonant circuit is hereinafter referred to as a resonant converter. Resonant converters are electrical circuits which can be supplied with an AC voltage and which are connected to the lighting means, such as one or more LEDs, in order to operate the lighting means electrically in a well defined manner.

A typical example of a resonant converter is a switching converter that comprises an LLC resonant circuit, hereinafter referred to as LLC converter.

A LLC converter is known per se from document WO 2014/060899 A2. In an LLC converter, an AC voltage is generated by a half-bridge section and provided to a resonant section. The energy, which is supplied with the AC voltage flows into the resonant section and is partially transmitted to the load of a transformer.

Document US 2013/0163290 A1 discloses a further example of a LLC converter, with controlled switching of the rectifying section based on primary-side resonance and magnetising currents.

The resonant section is composed of a (series) resonant circuit which is powered by the AC voltage of the half-bridge section. The resonant section provides a resonant tank. The resonant section in turn supplies a primary winding of a transformer. The supply voltage for supplying the lighting means typically is a DC supply voltage, which is generally achieved by means of a rectifying section. The transformer's secondary winding supplies the rectifying section which in turn directly supplies the lighting means.
If an LLC converter is used as a resonant converter, the resonant section of the LLC converter is composed of a resonance capacitor C1, a resonance coil L1 and preferably a shunt inductor L2. The optional shunt inductor L2 is basically used to transport the provided AC power to the load via the transformer's coils. The transformer is used as a galvanic barrier between the provided AC voltage and the required DC voltage for operating the lighting means. This galvanic isolation might be a safety requirement when operating lighting means.

In practical realizations, components of the transformer are usually combined with components of the resonant section since the transformer does not have ideal signal transmission behaviour.

A drawback of this known concept is the limitation of varying the voltage of the lighting means below a certain threshold value. The limiting factor in such a switching converter is the switched inductance element. The limitations are becoming apparent as requirements for dimming a lighting means to 1 percent or less over a range of a lighting means voltage are running into difficulties.

This problem is clear when considering that a switching converter is basically limiting load current by increasing the impedance of the switched inductor. A zero ampere load current would require an infinite frequency if the load voltage is lower than a critical level, which is impossible to achieve in real switching converters.

When the load of the switching converter comprises a low resistance value or the load voltage should be reduced to small values due to a dimming instruction, the switching frequency of the switching converter needs to be very high. Thus, the current through the switched inductor needs to be very low. This causes problems with the proper switching of the switching element of the half-bridge section of the switching converter. To obtain a proper switching, some current has to flow across these switching elements of the half-bridge section in view of capacity effects.

Additionally, the LLC converter is designed for providing constant load voltages. In such a constant load voltage scenario, the switched inductance element loads the transformer's primary winding and enables the converter to control the load current down to zero at a nominal load voltage. This additionally requires a resonant tuning of all resonant elements which are coupled in series to the switched inductance. In such a scenario, the nominal load voltage is nearly constant. In contrast, when driving a lighting means, the expectation is to drive the lighting means of a varying load voltage. This causes the switched inductance element to produce a varying loading effect. Clearly, as the load voltage reduces, the load from the switched inductance element also reduces which causes problems when attempting to control a near zero ampere load current.
Additionally, also the switch-on losses of the switching elements in the half-bridge section would increase.
Thus, there is a need to provide a switching converter for driving a load with variable load voltage without the above-mentioned drawbacks. Preferably, the switching frequency of the switching elements of the half-bridge converter should not be changed.

### SUMMARY OF THE INVENTION

The above identified drawbacks are avoided using a switching converter as claimed in the independent claim 1, optionally together with a ballast as claimed in claim 16 Advantageous embodiments can be derived from the respective dependent patent claims.
According to a first aspect of the invention, a switching converter, preferably a resonant converter of a ballast for driving a lighting means, is described. The switching converter at least comprises a half bridge section, wherein the half bridge section comprises a first switching element and a second switching element connected in series, wherein the first switching element and the second switching element are switched alternating. Furthermore the switching converter comprises a resonant section which may comprise an optional shunt inductor. Furthermore the switching converter comprises a rectifying section decoupled from the half-bridge section by means of a transformer, wherein the rectifying section provides a variable load voltage to a load and wherein the current through the resonant section is decoupled in an adjustable manner from the current through the load.

The half bridge section is a first half bridge section and the resonant section is a first resonant section. The switching converter further comprises a second half bridge section and a second resonant section, wherein the first half bridge section and the first resonant section are connected in parallel to the second half bridge section and the second resonant section and wherein the shunt inductor of the first resonant section is also the shunt inductor of the second resonant section. The shunt inductor is thus used in the first resonant section and the second resonant section. It should be noted, that the two parallel half-bridge sections do not lead to a full H-bridge as described above.

The second half-bridge section leads to an inductive reactive current which appears as inductive, resistive or capacitive. Thus, the voltage across the first resonant section and the second resonant section can be generated even when the load voltage is zero volts. So, no change in the switching frequency of the switching elements in the half-bridge section is necessary.

The currents through the first switching element and the second switching element at higher ampere levels are now possible. Using a second half-bridge section allows the use of a standardized rectifying section in the switching converter, because the control of the varying load voltage is obtained by the primary winding of the transformer of the switching converter.

A half-bridge section uses two switching elements, such as field effect transistors, short: FET. The first switching element is open while the second switching element is closed, thus obtaining an alternating switching. This anti-phased driving of the switching elements leads to a class AB amplifier, wherein each switching element operates the same way but also conducts a small amount of the other half. As a result, the region, where both devices simultaneously are nearly off, is reduced.

The half-bridge section is one half-bridge section of a full-bridge section, also called H-bridge. An H-bridge is an electronic circuit that enables a voltage to be applied across a load in either direction. The term H-bridge is derived from the typical graphical representation of such a circuit. An H-bridge is built with four switches, wherein switches S1 and S2 are arranged in series and switches S3 and S4 are arranged in series. The series arranged switches are arranged in parallel. A load is arranged in-between each connection point of the series connection of the switches S1, S2 and S3, S4. When the switches S1 and S4 are closed and switches S2 and S3 are open, a positive voltage will be applied across the load. Using the nomenclature above, the switches S1 and S2 should never be closed at the same time, as this would cause a short circuit on the input voltage source. The same applies to the switches S3 and S4. This condition is known as shoot-through.

The variable load voltage applied to the load leads to a varying loading effect at the resonant section. This varying load effect is dependent on the load voltage. A compensation of a decreasing load is achieved by decoupling the current in an adjustable manner. Thus, the load is maintained for the switching converter as the voltage load is reduced, preferably based on a dimming requirement or a dimming command. This leads to a switching converter which has variable load voltages but can be driven to zero ampere of load current through the load.

In a preferred embodiment, the switching circuit is an LLC converter that comprises a series connection of a resonance capacitance, a resonance inductance and an optional shunt inductor as the resonant section. The shunt inductor is the inductance which comprises the limiting current by increasing its impedance. As lower the voltage across the inductance, as higher is the impedance of the inductance. The varying of the load voltage leads to a varying of the loading effect. Therefore, it is necessary to adjust the coupling effect of the current from the resonant section to the current through the load.

In a preferred embodiment, the inductor value of the resonance inductor is approximately five times, preferably eight times, more preferably 10 times higher than the inductor value of the shunt inductor. This leads to a very small resonance inductor which leads to a very accurate switching converter.
In a preferred embodiment, a variable resistance element is connected in parallel to the rectifying circuit. A resistance connected across the load reduces the range of the required control, wherein a low load voltage would reduce the loading effect. Thus, the loading is maintained as the load voltage is reduced, preferably by using a FET.

In a preferred embodiment, a variable capacitance or inductance element is connected in parallel to the rectifying circuit. Thus, the loading is maintained as the load voltage is reduced. This avoids the power loss problem that occurs when using a variable resistance.

In a more preferred embodiment, the switching signals of the first switching section are phase-shifted to the switching signals of the second switching section, wherein the phase-shift is variable, preferably gradually varied from 180 degree phase-shift to zero degree phase-shift. If the phases of the two half-bridge sections have a phase relation of 180°, the current will flow from the first resonant section of the first half-bridge section to the second resonant section of the second half-bridge section, while no current will flow to the load connected to the rectifying section. The phase-shifting is obtained by using a phase shifting unit.
By gradually changing the phase difference between the switching signals of the first half-bridge section and the second half-bridge section from 180° to 0°, the current through the load can be increased such that a phase difference of 0° causes a power delivered to the load which is twice the power delivered by the individual half-bridge section.

It should be noted that each half bridge section is driven by the anti-phased switching signals. The 180° phase difference between those two switching signals stays constant when changing the relative phase between the switching signals for the half bridge sections.

In a preferred embodiment the current of the first half-bridge section is 90° phase-shifted to the current of the second half-bridge section. Thus, one half-bridge section applies current, wherein the other half-bridge section does not apply current. Thus, only one of the half-bridge sections produces voltage across the shunt inductor of the resonant section. However, the 90° phase shift current is still a current that is flowing in the shunt inductor of the resonant section and produces a voltage across this inductor. Therefore, even in the complete absence of any load current, the appropriate half-bridge section is still present and capable of controlling the output voltage of the switching converter. Thus, the load current can be set to zero amperes although the load voltage is decreased.

In a more preferred embodiment the rectifying section is an active rectifying section. Active in the sense of the invention is referred to a rectifying section on which energy is supplied to control the rectifying section and its rectification.

In a preferred embodiment the rectifying section comprises a first switching element and a second switching element connected in series, wherein the first switching element and the second switching element are switched alternating. Thus, a half-wave rectifier is achieved that is controllable via switching signals.

For a current from the secondary winding of the transformer, which flows from a negative current value to a positive current value, the first switching element of the rectifying section is conducting such that the resonant sections current will essentially flow into the switching element and then out of this switching element back to the resonant section. Such, there will be a substantial current flow through the switching inductance without any current arriving at the load connected at the output side.

In a preferred embodiment, the switching elements are FETs. Applying a control signal to the FET, which is independent from the switching signal of the switching elements of the switching section, leads to a switching converter with the ability to control the load currents as describes above.

Alternatively, the switching signal of the first switching element of the rectifying section is the switching signal of the first switching element of the half bridge section. The switching signal of the second switching element of the rectifying section is the switching signal of the second switching element of the half bridge section. Thus, an active synchronous rectifier is obtained. A current, which flows through the resonant section, will flow in to the switching elements in dependence on a switching phase, wherein substantially the current flows through the resonant section without current applied to the load. The switching signal is preferably applied to a control input of the FET.

In a preferred embodiment the switching signal of the rectifying section is phase-shifted to the switching signal of the rectifying section, wherein the phase shift is variable, preferably gradually varied from 180° phase shift to 0° phase shift. Thus, a current through the load can be increased, wherein a phase shift of 0° leads to a power which is twice the power of the half-bridge section. Thus, the current from the resonant section is decoupled in an adjustable manner from the current through the load.

In a preferred embodiment, a capacitance is arranged in parallel to each switching element of the half bridge section and/or the rectifying section, wherein the capacitance preferably comprises a capacitance value of a few Nano-Farads. Thus, the capacitance stores the charge obtained from the current and does not provide the current to the load.

In a preferred embodiment, the load is a lighting means, wherein the current through the lighting means is variable for dimming the lighting means.

In a preferred embodiment, the dimming range is from 0 Percent to 100 Percent of the load current, while the switching frequency of the switching converter stays constant.

In a second aspect of the invention, a ballast for a lighting means, especially an LED is provided. The ballast comprises a switching converter as described above, wherein a switching signal is generated by a control unit of the ballast and wherein the switching signal is applied to the switching converter.

In a preferred embodiment the switching frequency of the switching signal is constant over a dimming range of the lighting means, preferably wherein the switching frequency is in the frequency range between 200 Kilohertz and 600 Kilohertz.

The control unit is configured to control a phase shifting unit in that a load current through the shunt inductor is decoupled from the load current in a variable manner. Thus, a variable phase-shifting is achieved by the phase shifting unit.

### BRIEF DESCRIPTION OF THE DRAWINGS

In the following, exemplary embodiments of the invention are described with reference to drawings. Those exemplary embodiments do not limit the scope of the invention. The same reference signs in different drawings indicate the same elements or at least the same functions unless otherwise stated. In the drawings:
- Fig. 1: shows a switching converter according to the prior art;
- Fig. 2: shows a characteristic curve of the load current in dependence on the switching frequency for different load voltages using a switching converter according to Fig. 1;
- Fig. 3: shows a characteristic curve of the switch-on losses in dependence on the switching frequency for different load voltages using a switching converter according to Fig. 1;
- Fig. 4: shows a characteristic curve of the load current in dependence on the switching frequency for different load voltages using another switching converter according to prior art;
- Fig. 5: shows a characteristic curve of the switch-on losses in dependence on the switching frequency for different load voltages using another switching converter according to prior art;
- Fig. 6: shows another switching converter according to the prior art;
- Fig. 7: shows a first exemplary embodiment of a switching converter according to the invention;
- Fig. 8: shows a second exemplary embodiment of a switching converter according to the invention;
- Fig. 9: shows a characteristic curve of the load current in dependence on the phase-shift for different load voltages using the inventive switching converter;
- Fig. 10: shows another switching converter according to the prior art;
- Fig. 11: shows another switching converter according to the prior art;
- Fig. 12: shows a characteristic curve of the load current in dependence on the relative phase-shift for different load voltages;
- Fig. 13: shows a characteristic curve of the switch-on losses in dependence on the relative phase-shift for different load voltages.

### DETAILED DESCRIPTION OF THE PREFERRED EMBODIMENTS

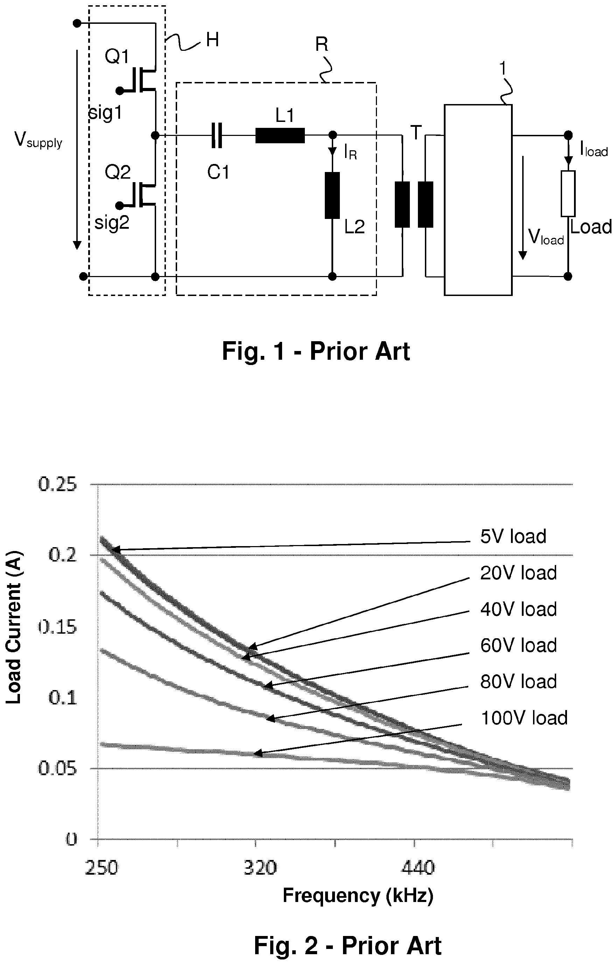

In Fig. 1 an LLC converter according to the prior art is shown. The LLC converter comprises a half-bridge section H, a resonant section R, a transformer T and a rectifying section 1. The rectifying section 1 supplies a load with a constant voltage V_{load} and a current I_{Load}. The half-bridge section H comprises a first switching element Q1 and a second switching element Q2. The switching elements Q1, Q2 are FETs. The first switching element Q1 is switched by a first switching signal sig1. The second switching element Q2 is switched by a second switching signal sig2. The first switching signal sig1 is 180° phase shifted to the second switching signal sig2. This phase-shift stays constant.

The LLC converter according to Fig. 1 can be operated at two resonant frequencies fᵣ₁ fᵣ₂. The first resonance frequency fᵣ₁ is determined by the resonance capacitance C1 and the resonance inductor L1. The second resonance frequency fᵣ₂ is determined by the resonance capacitance C1, the resonance inductor L1, the optional shunt inductor L2 and the specific load condition. As load becomes more resistive, the resonance frequency fᵣ₂ will shift to higher frequencies.

Note that the shunt inductor L2 is preferably not present when using a LLC converter without following isolation stage (transformer). The invention also relates to such LLC converters with following isolation stage, e.g. implemented as a transformer.

In a first switching interval, the resonance inductor L1 is resonant with resonance capacitance C1. Thus, the shunt inductor L2 is clamped by the load voltage V_{load}. When the current through the resonance inductor L1 is the same level as the current through the shunt inductor L2, the resonance of the resonance inductor L1 and the resonance capacitance C1 is stopped. Instead, now the shunt inductor L2 will participate into the resonant and the second switching interval begins.

During the second switching interval the resonant components will change to resonance capacitance C1 and shunt inductor L2 in series with resonance inductor L1. Thus, the resonance frequencies fᵣ₁, fᵣ₂ at different switching intervals is different. Because of the resonant between resonance capacitance C1 and shunt inductor L2, a peak on the gain appears at the second resonance frequency fᵣ₂.

In case the second switching element Q2 is turned off, the current through resonance inductor L1 is negative and will flow through the body diode of the first switching element Q1, which creates a zero voltage.

The limitation of such an LLC converter are becoming apparent as requirements for dimming LEDs to 1 % or less over a range of a load voltage V_{load} are running into difficulties. This problem is clear when considering that the LLC converter according to Fig. 1 is basically limiting load current I_{load} by increasing the impedance Z_{L2} of the shunt inductor L2. A load current I_{load} of zero amperes requires an infinite switching frequency of the signals sig1 and sig2 if the load voltage V_{load} is lower than a critical voltage level.

The LLC converter according to Fig. 1 is well suited for providing constant load voltages V_{load}. In case a lighting means should be driven with a dimming range from 0 % to 100 %, the expectation is to drive lighting means of varying the voltage and this causes the shunt inductor L2 to produce a varying load effect. Clearly, as the load voltage V_{load} reduces, the load from shunt inductor L2 also reduces, which causes problems when attempting to control a zero amperes load current I_{load}.

The arrangement according to Fig. 1 comprises a dead time between the first switching element Q1 and the second switching element Q2 of approximately 400 ns. The resonant section R comprises a resonance capacitance C1 of 10 Nano-Farads, a resonance inductor L1 of 100 Microhenry and a shunt inductor L2 of 1 Millihenry. The supply voltage V_{supply} is 100 volts.

In the conventional LLC converter, the voltage across the shunt inductor L2 is determined by the load current I_{load}. The load current I_{load} implies no voltage drop across the shunt inductor L2. There is no capability to control the output voltage V_{load}. Additionally, low currents make commutations of the switching elements Q1, Q2 impossible to achieve.

Fig. 2 shows a characteristic curve of the load current in dependence on the switching frequency for different load voltages using a switching converter according to Fig. 1. The switching frequency of the signals sig1 and sig2 varies in a range from 250 Kilohertz to 600 Kilohertz.

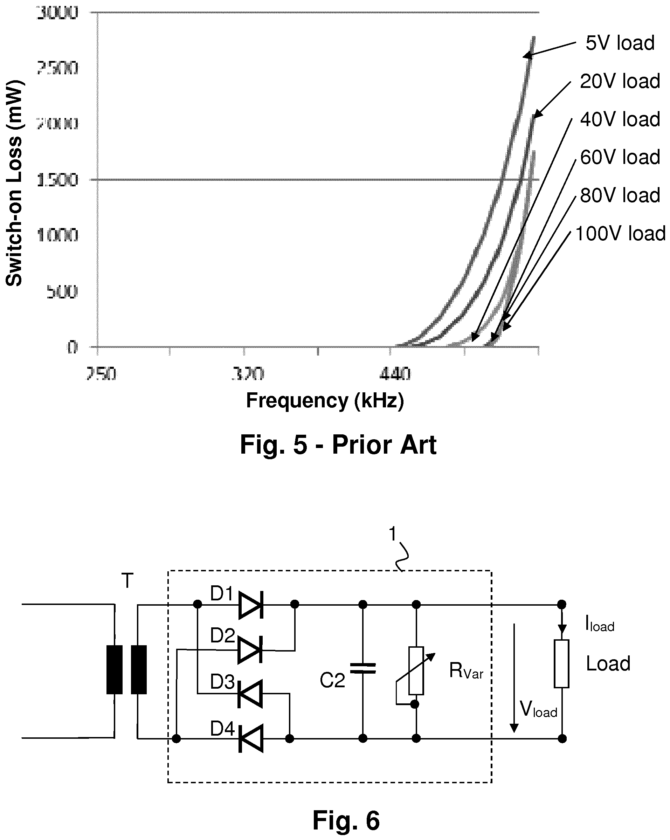

Even with this 3:1 frequency range, the load current I_{load} is only reduced to roughly 20 Percent of the full load current I_{load} at a low load voltage V_{load}. Thus, no sufficient regulation can be obtained when changing the frequency of the switching signals sig1 and sig2.

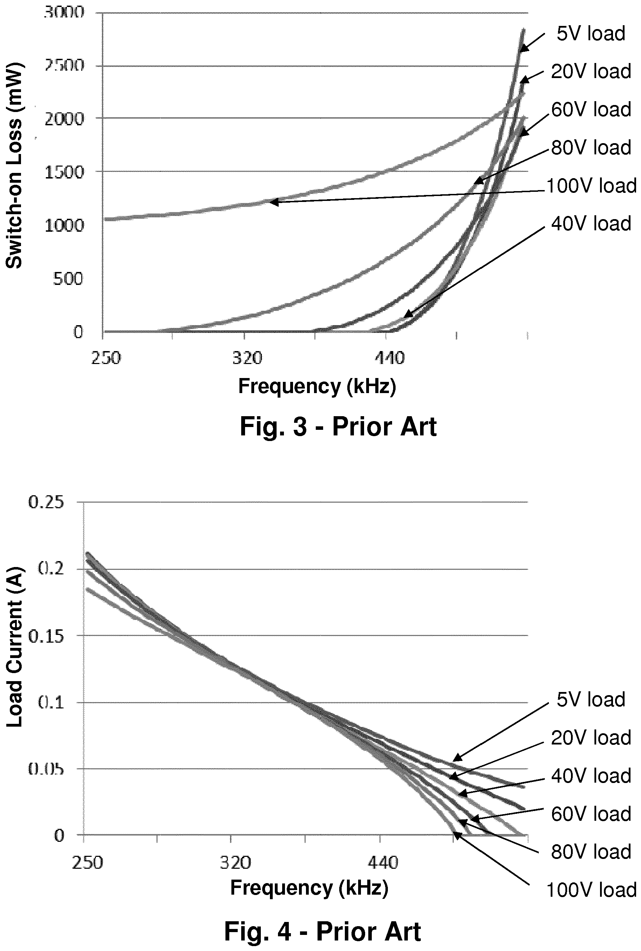

Fig. 3 shows a characteristic curve of the switch-on losses in dependence on the switching frequency for different load voltages using a switching converter according to Fig. 1. Again, the switching frequency of the signals sig1 and sig2 varies in a range from 250 Kilohertz to 600 Kilohertz. At frequencies above 440 Kilohertz, the switch-on losses vary between nearly 0 Milliwatts for a load voltage V_{load} of 5 volts and 1500 Milliwatts for a load voltage V_{load} of 100 volts. Thus, an increase of the load voltage V_{load} heavily increases the switching losses of the switching elements Q1, Q2 upon a certain switching frequency.
This disadvantageous effect can be slightly reduced by using an LCC converter instead of an LLC converter according to Fig. 1. The LCC converter reduces the switch-on losses and decreases the loading effects as shown in Fig. 4 and in Fig. 5.

As can be derived from Fig. 4 and Fig. 5, such an LCC converter gives control down to a zero amperes load current I_{load} only for a load voltage V_{load} down to 40 volts. At lower load voltages V_{load} the load current I_{load} cannot be reduced to zero amperes. Thus, using an LCC converter will not lead to a sufficient improvement over the known LLC converter according to Fig. 1.

In Fig. 6 an example of a prior-art switching converter is shown. A rectifying section 1 is shown. The switching converter according to Fig. 6 also incorporates a half bridge section H (not shown), a resonant section R (not shown) and a transformer T as shown in Fig. 1. To avoid unnecessary repetitions, only the differences to Fig. 1 are illustrated hereinafter. To obtain an adjustable decoupling of the current I_{R} through the shunt inductor L2 from the load current I_{load} a variable resistance R_{Var} is used in Fig. 6. The variable resistance R_{Var} allows the load to be maintained as the load voltage V_{load} is reduced. The variable resistance R_{Var} can be realized by applying a control-signal to the gate node of a FET. The variable resistance R_{Var} solves the problem of the reduced load voltage V_{load}.
Alternatively, and not shown in Fig. 6, a variable capacitance or a variable inductance could be used instead of the variable resistance R_{Var}. This would additionally lead to less power losses.

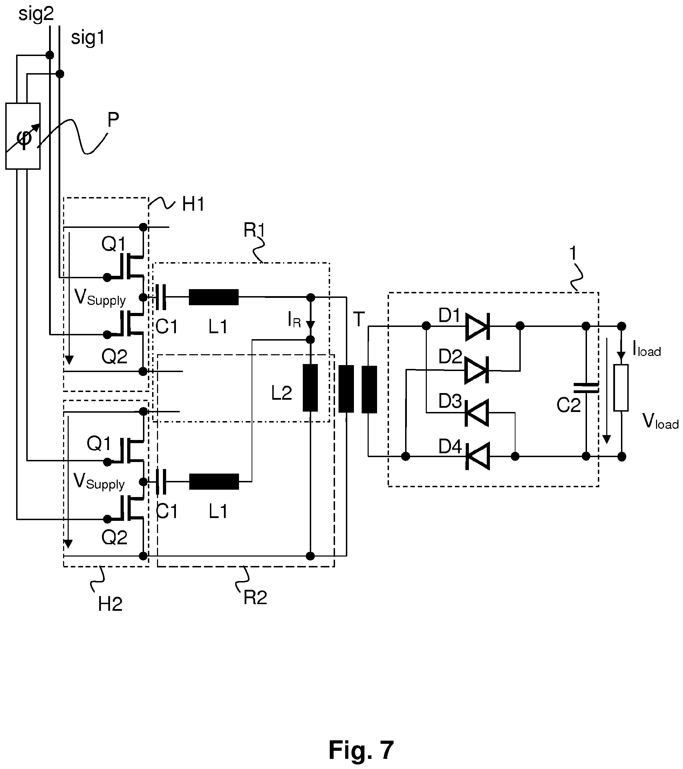

In Fig. 7, a first exemplary embodiment of a switching converter according to the invention is shown. The switching converter comprises a first half-bridge section H1 connected to a first resonant section R1. In parallel to this series connection, a second half-bridge section H2 connected to a second resonant section R2 is connected. The shunt inductor L2 of the first resonant section R1 is also the shunt inductor L2 of the second resonant section R2.
The first half bridge H1 comprises a series connection of two switching elements Q1 and Q2 which are applied with switching signals sigl, sig2 in an alternating manner. The output of the half bridge section H1 is applied to a first node of the resonant section R1 that comprises the first capacitance C1, the resonance inductance L1 and the shunt inductor L2.

Both half-bridge sections H1, H2 are built identically. Both resonant sections R1, R2 are built identically.

The output of the resonant sections R1, R2 is applied to a primary winding of the transformer T. The secondary coil of the transformer T comprises the rectifying section 1, which is a full-bridge rectifier using rectifying diodes D1, D2, D3 and D4. A charging capacitor C2 is used to smooth the output of the rectifying diodes D1 to D4. The output of the rectifying unit 1 is connected to the load.

Using a lighting means as a load means that the load is variable. Thus, it needs to be assured that a zero ampere load current I_{load} is achievable. This is obtained by varying the relative phase ϕ of the half bridge sections H1 and H2. This is achieved by a phase shifter unit P. If the phases ϕ of the two half-bridge sections H1 and H2 have a phase relation of 180°, the current will flow from the resonance inductor L1 of the first resonant section R1 to the resonance inductor L1 of the second resonant section R2, while absolutely no current will flow to the load connected via rectifying unit 1 to the transformer T. Thus, the current I_{load} is zero amperes, while no switching losses occur or the switching frequency has to be increased.

By gradually changing the relative phase difference Δϕ between the switching signals sigl, sig2 of the first half bridge H1 and the switching signals sigl, sig2 of the half bridge H2 from 180° to 0°, the current I_{load} through the load can be increased, such that for example having a phase difference of ϕ = 0°, the power delivered to the load will be twice the power delivered by the individual half-bridge sections H1 and H2. Clearly, varying the phase ϕ of the half bridge sections H1, H2 will cause an inductive reactive current to appear as inductive, resistive or capacitive. In this way it becomes possible to generate a voltage across resonance inductor L1 of the first half-bridge section H1 and the resonance inductor L1 of the second half-bridge section H2, even when the load current I_{load} is zero amperes. No variation of the frequency of the alternating switching signals sig1 and sig2 is needed. This approach also enables switching currents to be maintained at sufficiently high levels that commutation can still occur, which is a problem when frequencies increase drastically and currents are reduced.

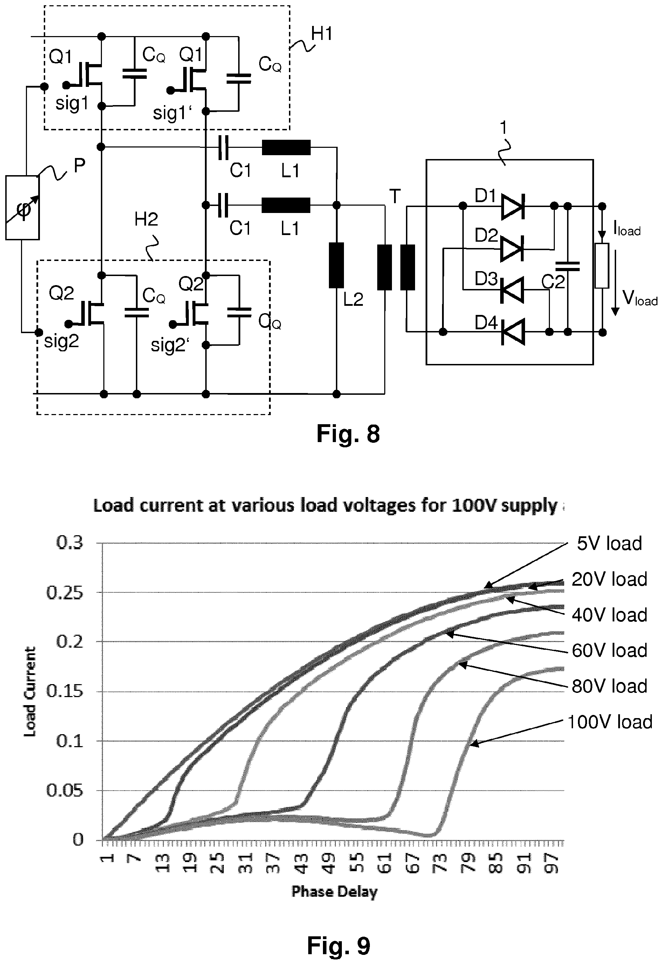

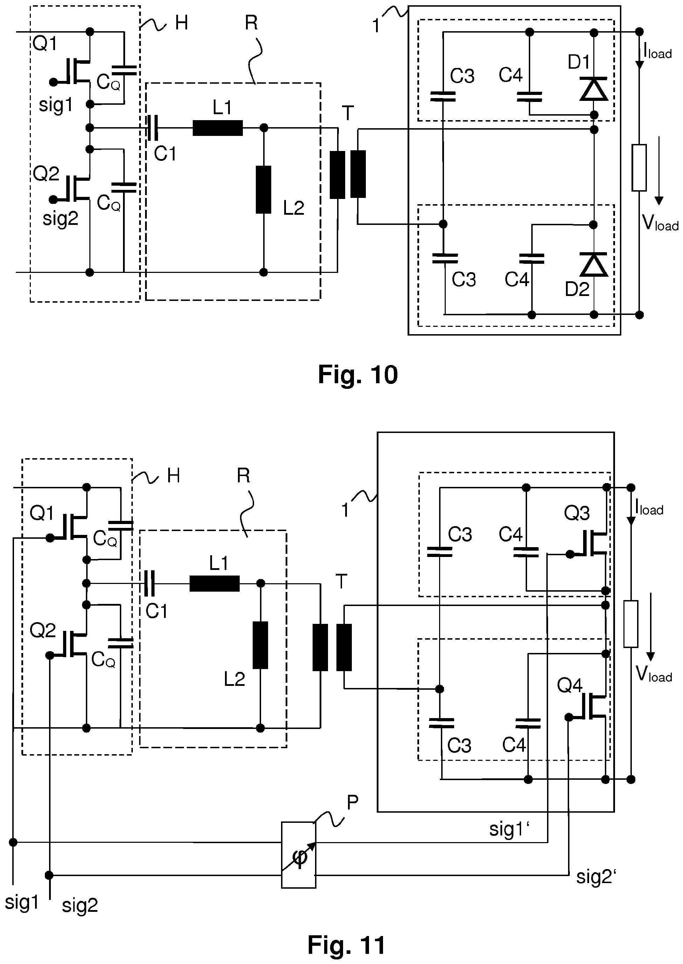

In Fig. 8 a second exemplary embodiment of a switching converter according to the invention is shown. In the following only the differences between the second exemplary embodiment and the first exemplary embodiment are described to avoid repetitions. The phase shifter P is only shown very schematically, although it is connected as shown in Fig. 7. According to Fig. 8, each switching element Q1, Q2 is connected in parallel to a switching capacitance C_{Q}. The switching capacitance C_{Q} is necessary to store the energy applied when the appropriate switching element Q1 or Q2 is turned-off.
Simulations according to Fig. 9 show that this switching converter according to the invention can swing the phase ϕ to create the transfer characteristic. When the phase swings to in-phase, the converter looks like a standard LLC-converter where the two parallel FETs Q1, Q2 are switching the two parallel resistance inductors L1 of the respective resonant sections R1, R2. This situation yields to a full load current I_{load}. No differences in the load current I_{load} is obtained by changing the relative phase ϕ of the first switching signal sig1 and the second switching signal sig2 for the specific half bridge section H1, H2 at different load voltages V_{load}. Potential advantages of this approach are that all control is on the primary side and a straight forward passive rectifying unit 1 can be used according to these exemplary embodiments.
If the problem of controlling switching at the secondary side of the transformer T can be overcome at some stage, another possibility becomes apparent, which is shown in Fig. 10. According to Fig. 10 an LLC converter with a passive voltage doubler rectifying unit 1 is shown. On the secondary side of the transformer T an active rectifier topology is used therein. This active rectifier topology has two parallel circuits of respectively one switching element D1, D2 across a capacitor C4.
In a first phase from the current flow of a negative current to a positive current, the diode D1 will be conducting, such that the current through the shunt inductor L2 of the resonant section R will essentially flow into the capacitor C4 of the switching element D1 and then out of this capacitor C4 back to the shunt inductor L2. Such, there will be a substantial current flow through the shunt inductor L2 without a current I_{load} at the load. In a second phase of current flow through the shunt inductor L2 from a positive current to a negative current, the diode D2 will be switched conductive. Thus, the load current I_{load} is decoupled from the current I_{R} through the shunt inductor L2 in an adjustable manner, allowing to reduce the load current I_{load} to a zero amperes current.
Now referring to Fig. 11, the diodes D1 and D2 are replaced by respective FETs Q3 and Q4. Those FETs are applied with respective switching signals sig1' and sig2'. By changing the phase ϕ of the switching signals sig1' and sig2' of the FETs Q3 and Q4, relative to the signals sig1 and sig2 of the FETs Q1 and Q2 in dependence on the current I_{R} flowing through the shunt inductor L2, the decoupling/coupling between the current I_{R} flow through the shunt inductor L2 and the current I_{load} through the load can be adjusted essentially in a continuous manner.
Alternatively, the FETs Q3 and Q4 can be controlled in a different manner (not shown). Thus, the switching converter acquires the ability to control the current I_{load}.

The circuits according to Fig. 10 and Fig. 11 require a control unit for the switching signals sigl, sig2, applied to the FETs Q3, Q4 on the secondary side of the transformer T which is applied with an information representing the timing of the switching of the switching elements Q1 and Q2 of the half-bridge section H. This control unit is part of a ballast for lighting means.

This approach gives a synchronous type of rectification with the advantage of controlling the inductors currents I_{R} so that current I_{load} can be decreased to zero amperes. Thus, by adjusting the phase continuously, one can arrive at a dimming from 0 % to 100 % of the load current I_{load} even when having a constant switching frequency of the switching elements Q1, Q2 of the switched converter and by keeping the current flow I_{R} through the shunt inductor L2 of the switched converter constant.

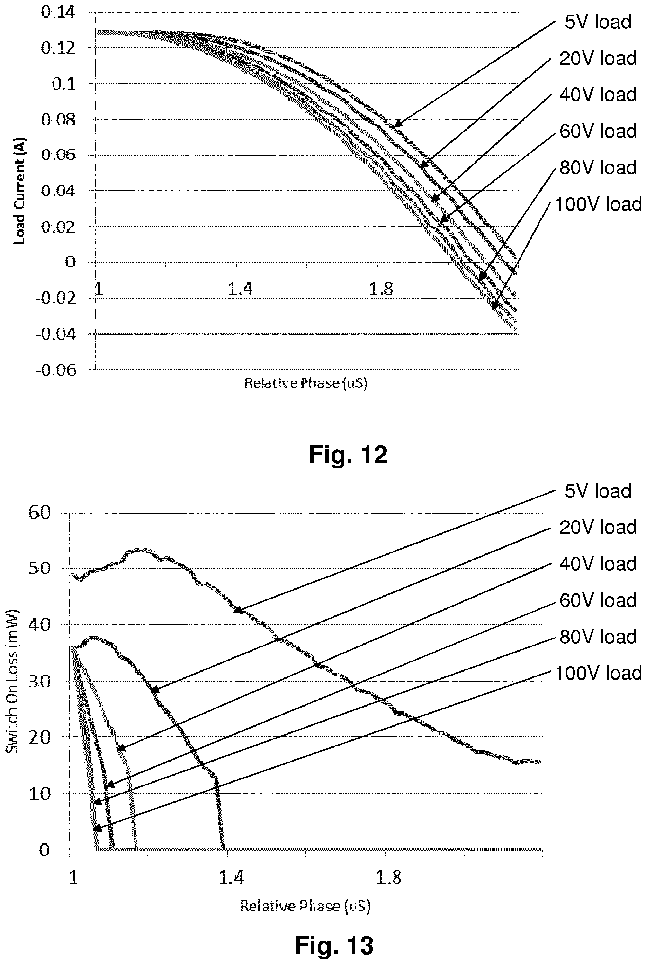

Fig. 12 shows a characteristic curve of the load current in dependence on the relative phase-shift for different load voltages. As can be seen, the load current I_{load} in relation to the relative phase ϕ is approximately equal also when the load voltage V_{load} decreases.
Fig. 13 shows a characteristic curve of the switch-on losses in dependence on the relative phase-shift for different load voltages. It can be seen that the switching-on losses are drastically reduced using the inventive switching converter. This concept introduces two components of current in the shunt inductor L2. The first component is in quadrature to the second component, so called 90° phase shifted, and contributes no current I_{load} to the load. However, the quadrature component is still a current that is flowing in the shunt inductor L2 and produces a voltage across the shunt inductor L2. Therefore, even in the complete absence of any load current I_{load}, the quadrature component is still present and capable of controlling the output voltage V_{load}.
Further to this, the fact that a current still flows in the shunt inductor L2 even when the load current I_{load} is zero allows commutation of the FETs Q1, Q2 to be possible.

While various embodiments of the present invention have been described above, it should be understood that they have been presented by way of example only, and not limitation. Numerous changes to the disclosed embodiments can be made in accordance with the disclosure herein. Thus, the breadth and scope of the present invention should not be limited by any of the above described embodiments. Rather, the scope of the invention should be defined in accordance with the following claims and their equivalents.
Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

### Reference signs

- 1: Rectifying section
- C1: Resonance capacitance
- C2: Charging capacitance
- C_{Q}: Switching capacitance
- D1-D4: Rectifying diode
- fᵣ₁: First resonance frequency
- fᵣ₂: Second resonance frequency
- H: Half bridge section
- H1: First half bridge section
- H2: Second half bridge section
- I_{Load}: Load current
- I_{R}: current through shunt inductor
- L1: Resonance inductance
- L2: Shunt inductance
- P: Phase Shifter
- Q1: First switching element
- Q2: Second switching element
- Q3: First rectifying transistor
- Q4: Second rectifying transistor
- R: Resonant section
- R1: First resonant section
- R2: Second resonant section
- sig1: First switching signal
- sig2: Second switching signal
- T: Transformer
- V_{load}: Load voltage
- V_{supply}: Supply voltage

## Claims

1. A switching converter, preferably a resonant converter of a ballast for driving a lighting means, the switching converter at least comprises:
- a first half bridge section (H, H1), wherein the first half bridge section (H, H1) comprises a first switching element (Q1) and a second switching element (Q2) connected in series, wherein the first switching element (Q1) and the second switching element (Q2) of the first half bridge section (H, H1) are switched alternating;
- a second half bridge section (H2), wherein the second half bridge section (H2) comprises a first switching element (Q1) and a second switching element (Q2) connected in series, wherein the first switching element (Q1) and the second switching element (Q2) of the second half bridge section (H2) are switched alternating;
- a first resonant section (R, R1) comprising a shunt inductor (L2) and coupled to the first half bridge section;
- a second resonant section (R2), coupled to the second half bridge section, wherein the shunt inductor (L2) of the first resonant section (R, R1) is also the shunt inductor (L2) of the second resonant section (R2); and
- a rectifying section (1) decoupled from the first half-bridge section (H, H1) and from the second half-bridge section (H2) by means of a transformer (T), wherein the rectifying section (1) provides a variable load voltage to a load;
wherein the first half bridge section (H, H1) and the first resonant section (R, R1) are connected in parallel to the second half bridge section (H2) and the second resonant section (R2).

2. The switching converter according to claim 1,
wherein the switching circuit is an LLC converter that comprises a series connection of a resonance capacitance (C1), a resonance inductance (L1) and the shunt inductor (L2).

3. The switching converter according to claim 2,
wherein the inductor value of the resonance inductance (L1) is approximately 5 times, preferably 8 times, more preferably 10 times smaller than the inductor value of the shunt inductor (L2).

4. The switching converter according to one of the preceding claims,
wherein the switching converter comprises a variable resistance element (R_{Var}) that is connected in parallel to the rectifying circuit.

5. The switching converter according to one of the preceding claims,
wherein the switching converter comprises a variable capacitance element or variable inductance element that is connected in parallel to the rectifying circuit.

6. The switching converter according to any one of the preceding claims,
wherein the switching signals of the first half bridge section (H, H1) are phase-shifted to the switching signals of the second half bridge section (H2), wherein the phase-shift is variable, preferably gradually varied from 180 degree phase-shift to zero degree phase-shift.

7. The switching converter according to any one of the preceding claims,
wherein the current of the first half bridge section (H, H1) is 90 degree phase-shifted to the current of the second half bridge section (H2).

8. The switching converter according to one of the preceding claims,
wherein the rectifying section (1) is an active rectifying section.

9. The switching converter according to one of the preceding claims,
wherein the rectifying section (1) comprises a first switching element and a second switching element connected in series, wherein the first switching element and the second switching element are switched alternating.

10. The switching converter according to claim 9,
wherein each switching element is a FET transistor.

11. The switching converter according to claims 9 or 10,
- wherein the switching signal of the first switching element of the rectifying section (1) is also the switching signal of the first switching element (Q1) of the first half bridge section (H, H1); and
- wherein the switching signal of the second switching element of the rectifying section (1) is also the switching signal of the second switching element (Q2) of the first half bridge section (H, H1).

12. The switching converter according to one of the claims 9 to 11,
wherein the switching signal of the first switching element of the rectifying section (1) is phase-shifted to the switching signal of the second switching element of the rectifying section (1); and
wherein the phase-shift is variable, preferably gradually varied from 180 degree phase-shift to zero degree phase-shift.

13. The switching converter according to one of the preceding claims,
wherein a capacitance is arranged in parallel to each switching element (Q1, Q2) of the first half-bridge section (H, H1), wherein the capacitance preferably comprises a capacitance value of few Nano-farads.

14. The switching converter according to one of the preceding claims,
wherein the load, to which the rectifying section (1) of the switching converter provides the variable load voltage, is a lighting means; and wherein the switching converter is configured to drive dimming of the lighting means.

15. The switching converter according to claim 14, wherein the switching converter is configured to drive the dimming with regard to a dimming range that is from 0 % to 100 % of the load current, while the switching frequency of the switching converter stays constant.

16. A ballast for a lighting means, especially an LED, comprising a switching converter according one of the preceding claims, wherein a switching signal is generated by a control unit of the ballast and wherein the switching signal is applied to the switching converter.

17. The ballast for a lighting means according to claim 16,
wherein the switching frequency of the switching signal is constant over a dimming range of the lighting means, preferably wherein the switching frequency is in the frequency range between 200 Kilohertz and 600 Kilohertz.

18. The ballast for a lighting means according to claim 16 or 17,
wherein the control unit is configured to control a phase shifting unit (P), wherein the phase shifting unit (P) is configured to vary a phase of the first and of the second half bridge section.

## Patentansprüche

1. Schaltwandler, bevorzugt ein Resonanzwandler eines Vorschaltgeräts zum Ansteuern eines Beleuchtungsmittels, wobei der Schaltwandler wenigstens Folgendes umfasst:
- einen ersten Halbbrückenabschnitt (H, H1), wobei der erste Halbbrückenabschnitt (H, H1) ein erstes Schaltelement (Q1) und ein zweites Schaltelement (Q2), die in Reihe verbunden sind, umfasst, wobei das erste Schaltelement (Q1) und das zweite Schaltelement (Q2) des ersten Halbbrückenabschnitts (H, H1) alternierend geschaltet werden;
- einen zweiten Halbbrückenabschnitt (H2), wobei der zweite Halbbrückenabschnitt (H2) ein erstes Schaltelement (Q1) und ein zweites Schaltelement (Q2), die in Reihe verbunden sind, umfasst, wobei das erste Schaltelement (Q1) und das zweite Schaltelement (Q2) des zweiten Halbbrückenabschnitts (H2) alternierend geschaltet werden;
- einen ersten Resonanzabschnitt (R, R1), der eine Shunt-Induktivität (L2) umfasst und mit dem ersten Halbbrückenabschnitt gekoppelt ist;
- einen zweiten Resonanzabschnitt (R2), der mit dem zweiten Halbbrückenabschnitt gekoppelt ist, wobei die Shunt-Induktivität (L2) des ersten Resonanzabschnitts (R, R1) auch die Shunt-Induktivität (L2) des zweiten Resonanzabschnitts (R2) ist; und
- einen Gleichrichtungsabschnitt (1), der von dem ersten Halbbrückenabschnitt (H, H1) und von dem zweiten Halbbrückenabschnitt (H2) mittels eines Transformators (T) entkoppelt ist, wobei der Gleichrichtungsabschnitt (1) eine variable Lastspannung an eine Last liefert;
wobei der erste Halbbrückenabschnitt (H, H1) und der erste Resonanzabschnitt (R, R1) mit dem zweiten Halbbrückenabschnitt (H2) und dem zweiten Resonanzabschnitt (R2) parallel verbunden sind.

2. Schaltwandler nach Anspruch 1, wobei die Schalt-Schaltung ein LLC-Wandler ist, der eine Reihenverbindung einer Resonanzkapazität (C1), einer Resonanzinduktivität (L1) und der Shunt-Induktivität (L2) umfasst.

3. Schaltwandler nach Anspruch 2, wobei der Induktivitätswert der Resonanzinduktivität (L1) näherungsweise 5-mal, bevorzugt 8-mal, bevorzugter 10-mal kleiner als der Induktivitätswert der Shunt-Induktivität (L2) ist.

4. Schaltwandler nach einem der vorhergehenden Ansprüche, wobei der Schaltwandler ein variables Widerstandselement (Rᵥₐᵣ) umfasst, das mit der Gleichrichtungsschaltung parallel verbunden ist.

5. Schaltwandler nach einem der vorhergehenden Ansprüche, wobei der Schaltwandler ein variables Kapazitätselement oder ein variables Induktivitätselement umfasst, das mit der Gleichrichtungsschaltung parallel verbunden ist.

6. Schaltwandler nach einem der vorhergehenden Ansprüche, wobei die Schaltsignale des ersten Halbbrückenabschnitts (H, H1) zu den Schaltsignalen des zweiten Halbbrückenabschnitts (H2) phasenverschoben sind, wobei die Phasenverschiebung variabel ist, bevorzugt schrittweise von einer 180-Grad-Phasenverschiebung zu einer Null-Grad-Phasenverschiebung variiert.

7. Schaltwandler nach einem der vorhergehenden Ansprüche, wobei der Strom des ersten Halbbrückenabschnitts (H, H1) zu dem Strom des zweiten Halbbrückenabschnitts (H2) um 90 Grad phasenverschoben ist.

8. Schaltwandler nach einem der vorhergehenden Ansprüche, wobei der Gleichrichtungsabschnitt (1) ein aktiver Gleichrichtungsabschnitt ist.

9. Schaltwandler nach einem der vorhergehenden Ansprüche, wobei der Gleichrichtungsabschnitt (1) ein erstes Schaltelement und ein zweites Schaltelement, die in Reihe verbunden sind, umfasst, wobei das erste Schaltelement und das zweite Schaltelement alternierend geschaltet werden.

10. Schaltwandler nach Anspruch 9, wobei jedes Schaltelement ein FET-Transistor ist.

11. Schaltwandler nach Anspruch 9 oder 10,
- wobei das Schaltsignal des ersten Schaltelements des Gleichrichtungsabschnitts (1) auch das Schaltsignal des ersten Schaltelements (Q1) des ersten Halbbrückenabschnitts (H, H1) ist; und
- wobei das Schaltsignal des zweiten Schaltelements des Gleichrichtungsabschnitts (1) auch das Schaltsignal des zweiten Schaltelements (Q2) des ersten Halbbrückenabschnitts (H, H1) ist.

12. Schaltwandler nach einem der Ansprüche 9 bis 11, wobei das Schaltsignal des ersten Schaltelements des Gleichrichtungsabschnitts (1) zu dem Schaltsignal des zweiten Schaltelements des Gleichrichtungsabschnitts (1) phasenverschoben ist; und
wobei die Phasenverschiebung variabel ist, bevorzugt schrittweise von einer 180-Grad-Phasenverschiebung zu einer Null-Grad-Phasenverschiebung variiert.

13. Schaltwandler nach einem der vorhergehenden Ansprüche, wobei eine Kapazität parallel zu jedem Schaltelement (Q1, Q2) des ersten Halbbrückenabschnitts (H, H1) angeordnet ist, wobei die Kapazität bevorzugt einen Kapazitätswert von einigen Nanofarad umfasst.

14. Schaltwandler nach einem der vorhergehenden Ansprüche, wobei die Last, an die der Gleichrichtungsabschnitt (1) des Schaltwandlers die variable Lastspannung liefert, ein Beleuchtungsmittel ist; und wobei der Schaltwandler dazu konfiguriert ist, ein Dimmen des Beleuchtungsmittels anzusteuern.

15. Schaltwandler nach Anspruch 14, wobei der Schaltwandler dazu konfiguriert ist, dass Dimmen mit Bezug auf einen Dimmbereich anzusteuern, der von 0 % bis 100 % des Laststroms reicht, wobei die Schaltfrequenz des Schaltwandlers konstant bleibt.

16. Vorschaltgerät für ein Beleuchtungsmittel, insbesondere eine LED, das einen Schaltwandler nach einem der vorhergehenden Ansprüche umfasst, wobei ein Schaltsignal durch eine Steuereinheit des Vorschaltgeräts erzeugt wird und wobei das Schaltsignal an den Schaltwandler angelegt wird.

17. Vorschaltgerät für ein Beleuchtungsmittel nach Anspruch 16, wobei die Schaltfrequenz des Schaltsignals über einen Dimmbereich des Beleuchtungsmittels konstant ist, wobei bevorzugt die Schaltfrequenz in dem Frequenzbereich zwischen 200 Kilohertz und 600 Kilohertz liegt.

18. Vorschaltgerät für ein Beleuchtungsmittel nach Anspruch 16 oder 17, wobei die Steuereinheit dazu konfiguriert ist, eine Phasenverschiebungseinheit (P) zu steuern, wobei die Phasenverschiebungseinheit (P) dazu konfiguriert ist, eine Phase des ersten und des zweiten Halbbrückenabschnitts zu variieren.

## Revendications

1. Convertisseur à découpage, de préférence un convertisseur résonant d'un ballast destiné à piloter un moyen d'éclairage, le convertisseur à découpage comprenant au moins :
- une première section de demi-pont (H, H1), la première section de demi-pont (H, H1) comprenant un premier élément de commutation (Q1) et un deuxième élément de commutation (Q2) branchés en série, le premier élément de commutation (Q1) et le deuxième élément de commutation (Q2) de la première section de demi-pont (H, H1) étant commutés en alternance ;
- une deuxième section de demi-pont (H2), la deuxième section de demi-pont (H2) comprenant un premier élément de commutation (Q1) et un deuxième élément de commutation (Q2) branchés en série, le premier élément de commutation (Q1) et le deuxième élément de commutation (Q2) de la deuxième section de demi-pont (H2) étant commutés en alternance ;
- une première section résonante (R, R1) comprenant une inductance shunt (L2) et connectée à la première section de demi-pont ;
- une deuxième section résonante (R2) connectée à la deuxième section de demi-pont, l'inductance shunt (L2) de la première section résonante (R, R1) étant également l'inductance shunt (L2) de la deuxième section résonante (R2) ; et
- une section de redressement (1) découplée de la première section de demi-pont (H, H1) et de la deuxième section de demi-pont (H2) au moyen d'un transformateur (T), la section de redressement (1) fournissant une tension de charge variable à une charge ;
la première section de demi-pont (H, H1) et la première section résonante (R, R1) étant branchées en parallèle avec la deuxième section de demi-pont (H2) et la deuxième section résonante (R2).

2. Convertisseur à découpage selon la revendication 1, le circuit de découpage étant un convertisseur LLC qui comprend un branchement en série d'un condensateur de résonance (C1), d'une inductance de résonance (L1) et de l'inductance shunt (L2).

3. Convertisseur à découpage selon la revendication 2, la valeur d'inductance de l'inductance de résonance (L1) étant approximativement 5 fois, de préférence 8 fois, plus préférablement 10 fois plus petite que la valeur d'inductance de l'inductance shunt (L2).

4. Convertisseur à découpage selon l'une des revendications précédentes, le convertisseur à découpage comprenant un élément à résistance variable (Rᵥₐᵣ) qui est branché en parallèle avec le circuit de redressement.

5. Convertisseur à découpage selon l'une des revendications précédentes, le convertisseur à découpage comprenant un élément à capacité variable ou un élément à inductance variable qui est branché en parallèle avec le circuit de redressement.

6. Convertisseur à découpage selon l'une quelconque des revendications précédentes, les signaux de commutation de la première section de demi-pont (H, H1) étant déphasés par rapport signaux de commutation de la deuxième section de demi-pont (H2), le déphasage étant variable, de préférence varié graduellement d'un déphasage de 180 degrés à un déphasage de zéro degré.

7. Convertisseur à découpage selon l'une quelconque des revendications précédentes, le courant de la première section de demi-pont (H, H1) étant déphasé de 90 degrés par rapport au courant de la deuxième section de demi-pont (H2).

8. Convertisseur à découpage selon l'une des revendications précédentes, la section de redressement (1) étant une section de redressement active.

9. Convertisseur à découpage selon l'une quelconque des revendications précédentes, la section de redressement (1) comprenant un premier élément de commutation et un deuxième élément de commutation branchés en série, le premier élément de commutation et le deuxième élément de commutation étant commutés en alternance.

10. Convertisseur à découpage selon la revendication 9, chaque élément de commutation étant un transistor FET.

11. Convertisseur à découpage selon les revendications 9 ou 10,
- le signal de commutation du premier élément de commutation de la section de redressement (1) étant également le signal de commutation du premier élément de commutation (Q1) de la première section de demi-pont (H, H1) ; et
- le signal de commutation du deuxième élément de commutation de la section de redressement (1) étant également le signal de commutation du deuxième élément de commutation (Q2) de la première section de demi-pont (H, H1).

12. Convertisseur à découpage selon l'une des revendications 9 à 11,
le signal de commutation du premier élément de commutation de la section de redressement (1) étant déphasé par rapport au signal de commutation du deuxième élément de commutation de la section de redressement (1) ; et
le déphasage étant variable, de préférence varié graduellement d'un déphasage de 180 degrés à un déphasage de zéro degré.

13. Convertisseur à découpage selon l'une des revendications précédentes, un condensateur étant branché en parallèle avec chaque élément de commutation (Q1, Q2) de la première section de demi-pont (H, H1), le condensateur ayant de préférence une valeur de capacité de quelques nanofarads.

14. Convertisseur à découpage selon l'une des revendications précédentes, la charge à laquelle la section de redressement (1) du convertisseur à découpage fournit la tension de charge variable étant un moyen d'éclairage ; et le convertisseur à découpage étant configuré pour piloter la gradation du moyen d'éclairage.

15. Convertisseur à découpage selon la revendication 14, le convertisseur à découpage étant configuré pour piloter la gradation en considération d'une plage de gradation qui s'étend de 0 % à 100 % du courant de charge, alors que la fréquence de commutation du convertisseur à découpage reste constante.

16. Ballast pour un moyen d'éclairage, notamment une LED, comprenant un convertisseur à découpage selon l'une des revendications précédentes, un signal de commutation étant généré par une unité de commande du ballast et le signal de commutation étant appliqué au convertisseur à découpage.

17. Ballast pour un moyen d'éclairage selon la revendication 16, la fréquence de commutation du signal de commutation étant constante sur une plage de gradation du moyen d'éclairage, de préférence la fréquence de commutation se trouvant dans la plage de fréquences entre 200 kilohertz et 600 kilohertz.

18. Ballast pour un moyen d'éclairage selon la revendication 16 ou 17, l'unité de commande étant configurée pour commander une unité de déphasage (P), l'unité de déphasage (P) étant configurée pour faire varier une phase de la première et de la deuxième section de demi-pont.
